# EUROPÄISCHE PATENTSCHRIFT

(11) **EP 3 788 112 B1**
(45) Veröffentlichungstag und Bekanntmachung des Hinweises auf die Patenterteilung: **17.07.2024**
(21) Anmeldenummer: 18726733.1
(22) Anmeldetag: 02.05.2018
(51) Int. Cl.: C09J 7/38

(54) **WICKEL- UND STANZBARES KLEBEBAND ZUR SELEKTIVEN UV-AKTIVIERUNG**
ADHESIVE TAPE THAT CAN BE WOUND AND STAMPED FOR SELECTIVE UV ACTIVATION
BANDE ADHÉSIVE POUVANT ÊTRE ENROULÉE ET POINÇONNÉE DESTINÉE À UNE ACTIVATION PAR UV SÉLECTIVE

(43) Veröffentlichungstag der Anmeldung: 10.03.2021
(73) Patentinhaber: Lohmann GmbH & Co. KG, 56567 Neuwied (DE)
(72) Erfinder: KÜHL, Oliver, 56587 Straßenhaus (DE); FRIEDLAND, Ruben, 56626 Andernach (DE); STAHL, Johannes, 66862 Kindsbach (DE); HOß, Cornelia, 56075 Koblenz (DE)
(74) Vertreter: Dennemeyer & Associates S.A.
(86) Internationale Anmeldenummer: PCT/EP2018/061236
(87) Internationale Veröffentlichungsnummer: WO 2019/210949

(56) Entgegenhaltungen:
- WO-A1-03/099953
- WO-A1-2017/174303
- WO-A1-98/38262
- US-A1- 2011 018 127

## Beschreibung

### Technisches Gebiet

Die vorliegende Erfindung betrifft ein Wickel- und stanzbares Klebeband zur selektiven UV-Aktivierung, welches mindestens eine erste UV-aktivierbare Klebmasse auf Basis von Epoxid und einen Träger umfasst, und ein Verfahren zum klebenden Verbinden zweier Fügeteile mittels des Wickel- und stanzbaren Klebebands.

### Stand der Technik

Die in den nachfolgenden Ausführungen verwendeten Begriffe sind wie folgt zu verstehen:
Mit "klebender Film" ist im Folgenden jede Form von flächigen klebenden Systemen gemeint, also nicht nur Klebebänder im engeren Sinne, sondern auch Klebefolien, Klebestreifen, Klebeplatten oder klebende Stanzteile. "Haftklebend" werden solche Klebeverbindungen genannt, bei denen die beiden Fügepartner durch eine dazwischen liegende Klebeschicht und unter Druck miteinander verbunden werden. Die Verbindung ist in der Weise reversibel, dass sie wieder gelöst werden kann, ohne die beiden Fügepartner zu beschädigen, weil die Klebenaht die schwächste Stelle in der Fügeverbindung ist.

Als "strukturell" werden Klebeverbindungen bezeichnet, bei denen die Fügepartner in der Weise miteinander verbunden werden, dass bei einer Trennung die Verbindung nicht unbedingt an der Klebenaht gelöst wird, sondern unter Umständen auch einer der Fügepartner die schwächste Stelle in der Verbindung sein kann und durch die Trennung dann beschädigt wird. Strukturelle Klebeverbindungen besitzen also hohe Festigkeiten. Die Festigkeiten, gemessen im quasistatischen Zugscherversuch, liegen bei strukturellen Verbindungen über 6 MPa. Übliche Werte, die für strukturelle Klebeverbindungen von Epoxidklebstoffen angestrebt werden, liegen bei 10 bis 20 MPa.

"Strahlenhärtung" bezeichnet einen Prozess, bei dem mit Hilfe von energiereicher Strahlung reaktive Materialien von einem niedermolekularen in einen hochmolekularen Zustand überführt werden
Unter UV (ultraviolett) -Strahlung wird im vorliegenden Falle "UVA"- oder "UVC"-Licht verstanden. UVA-Strahlung liegt im Wellenbereich von ca. 380 bis 315 Nanometer (nm), UVC-Strahlung liegt im Wellenbereich von ca. 280 bis 100 nm. Generell handelt es sich bei beiden um elektromagnetische Strahlung mit Wellenlängen, die kürzer als das sichtbare Licht sind. Beim UVA-Licht liegt der Energieeintrag bei ca. 3,26 bis 3,95 Elektronenvolt (eV), beim UVC-Licht bei ca. 4,43 bis 12,40 eV. "Aktivierung" bedeutet, dass der Klebstoff nach Bestrahlung mit UV-Licht beginnt auszuhärten, d.h. die im Klebstoff befindlichen Fotoinitiatoren werden durch Lichteinstrahlung aktiviert und stoßen den Aushärteprozess an, indem sie die Bildung von Polymerketten einleiten. Üblicherweise werden UV-härtende Klebstoffe nach der Fügung der Klebepartner bestrahlt. Dazu bedarf es Substraten, die ausreichend durchlässig sind für die verwendete UV-Strahlung. Die Klebestelle wird dann so lange bestrahlt, bis die Aushärtung ausreichend fortgeschritten ist. Nachteilig ist dabei zum einen, dass Substrate, die nicht durchlässig sind, so nicht verklebt werden können und zum anderen, dass die Bestrahlungszeiten relativ lange sind.

"Offene Zeit" bzw. "Offenzeit" ist die Zeit zwischen Klebstoffauftrag und Verklebung. In der Offenzeit verteilt sich beispielsweise ein flüssiger Schmelzklebstoff auf den zu verbindenden Oberflächen und sorgt für die nötige Haftung (Adhäsion). Da sich die Viskosität, d.h. die Zähflüssigkeit eines Klebstoffes nach dem Auftrag in der Regel erhöht, ist die Offenzeit bei Klebstoffen zeitlich begrenzt.

Die "Aushärtezeit" ist der Zeitraum zwischen der Fügung der Fügepartner und der endgültigen Festigkeit der Verbindung.

Mit "Dunkelreaktion" wird in der Folge die Tatsache bezeichnet, dass eine Härtungsreaktion durch kurzzeitige Bestrahlung des Klebstoffes mit UV-Licht angestoßen (angetriggert) wird und dann die komplette Aushärtung ohne weitere Bestrahlung erfolgt.

Die WO 2017/174303 A1 zeigt ein strahlenaktivierbares Haftklebeband mit Dunkelreaktion und dessen Verwendung.

Die WO 98/38262 A1 zeigt ein strahlenaktivierbares Haftklebeband mit verbesserten Eigenschaften bezüglich einer Handhabbarkeit bei Raumtemperatur.

Die US 2011/0018127 A1 zeigt einen Klebefilm bestehend aus einer oberen, UV-aktivierbaren Schicht und einer unteren, nicht UV-aktivierbaren Schicht.

Die WO 03/099953 A1 zeigt aktivierbare Klebemittel, welche dreidimensionale Ausformungen aufweisen.

Gemäß den bekannten Haftklebebändern werden sämtliche Klebmassen der Haftklebebänder durch eine Bestrahlung mittels UV-Licht aktiviert. Die Applikation der Haftklebebänder ist sodann auf die mit der UV-Licht-Bestrahlung eintretenden Offenzeit beschränkt. Dadurch sind die Anwendungsgebiete und insbesondere der Zeitraum, in dem die Haft-Klebebänder appliziert werden können, beispielsweise um zwei Fügeteile miteinander zu verbinden, eingeschränkt.

### Darstellung der Erfindung

Ausgehend von dem bekannten Stand der Technik ist es eine Aufgabe der vorliegenden Erfindung, ein verbessertes Klebeband mit größerem Anwendungsspielraum bereitzustellen.

Die Aufgabe wird durch ein Klebeband mit den Merkmalen des Anspruchs 1 gelöst. Vorteilhafte Weiterbildungen ergeben sich aus den Unteransprüchen.

Entsprechend wird ein Wickel- und stanzbares Klebeband zur selektiven UV-aktivierung vorgeschlagen, das mindestens eine erste UV-aktivierbare Klebmasse auf Basis von Epoxid und einen Träger umfasst. Erfindungsgemäß ist der Träger UV-intransparent, um so eine selektive UV- Aktivierbarkeit des Klebebands bereitzustellen.

Durch den UV-intransparenten Träger kann die erste UV-aktivierbare Klebmasse gezielt aktiviert werden. Die der ersten Klebemasse abgewandte Oberfläche des UV-intransparenten Trägers wird durch eine Aktivierung, d.h. UV-Bestrahlung der ersten Klebmasse nicht beeinflusst. Die UV-Behandlung der ersten Klebmasse kann somit von einer möglichen UV-Behandlung der der ersten Klebemasse abgewandten Oberfläche des UV-intransparenten Trägers entkoppelt werden.

Der Träger weist eine erste Oberfläche und eine zweite Oberfläche auf, wobei die erste UV-aktivierbare Klebmasse auf der Seite der ersten Oberfläche des Trägers angeordnet ist, und eine zweite Klebmasse auf der Seite der zweiten Oberfläche des Trägers angeordnet ist.

Durch den UV-intransparenten Träger kann die Aushärtung in einem zweistufigen, voneinander entkoppelten Prozess ausgeführt werden. So kann zum Beispiel bei einem symmetrischen doppelseitigen Klebeband bestehend aus einem UV-intransparenten Träger und zwei gleichartigen UV-aktivierbaren Klebmassen ein möglicher Anwender das Klebeband einseitig aktivieren und auf einem ersten Fügeteil applizieren, ohne dass hierdurch eine Aktivierung der zweiten Klebmasse stattfindet. Diese kann in dem genannten Beispiel innerhalb der Haltbarkeit des Klebebandes beim Endanwender inklusive des vorausgerüsteten ersten Fügeteils aktiviert und befestigt werden.

Das Klebeband besteht aus einem zweiseitig beschichteten UV- intransparenten Träger (z.B. aus Folie, Schaum, Papier oder Textil).

Außerdem können auch Kombinationen der vorstehenden Klebebänder mit anderen klebenden Schichten wie zum Beispiel haftklebenden oder schmelzklebenden Schichten, wiederum mit UV- intransparentem Träger bereitgestellt werden.

Üblicherweise sind auch Abdeckungen (Release Liner) Bestandteil von Klebebändern. Hier können prinzipiell alle allseits bekannten Arten von Release Linern eingesetzt werden.

Die Verarbeitung und Beschichtung der Klebmasse kann über einen Lösemittel- oder Hotmeltprozess erfolgen. Auch über die sogenannte Syruptechnologie, bei der der filmbildende Anteil erst bei der Beschichtung aus Monomeren oder Oligomeren aufgebaut wird, sind die Verarbeitung und Beschichtung möglich. Das Klebeband ist im nicht aktivierten Zustand haftklebend und kann so bei der Verarbeitung wie ein "normales" Haftklebeband behandelt werden, d.h. es kann leicht haftend appliziert und gegebenenfalls auch repositioniert werden. Aus dem Klebeband können Stanzteile gefertigt werden, die vor der Applikation auf den jeweiligen zu verklebenden Teilen durch UV-Licht aktiviert werden können, um nach der Vernetzung einen (semi- )strukturellen Verbund zu erzeugen.

Die Härtung der Klebebänder und Stanzteile wird schließlich durch UVA- oder UVC-Licht aktiviert. Erst dann werden die Fügepartner endgültig und strukturell gefügt. Da die Härtungsreaktion in mehreren Schritten abläuft, ist auch nach der Aktivierung noch eine gewisse Zeitspanne vorhanden, während der die Fügeteile endgültig ausgerichtet und gefügt werden können, eine weitere Aktivierung nach dem Anstoßen der Härtung durch UV-Licht ist nicht mehr notwendig.

Die Dauer des Ablaufs der Dunkelreaktion hängt stark von verschiedenen Faktoren ab, z.B. der eingesetzten Harzkomponente (cycloaliphatisches oder aromatisches Epoxidharz), der Kettenlänge, dem Initiatortyp, der Bestrahlungszeit, der Bestrahlungsdosis (UV-Wellenlänge) oder auch der Temperatur. Die Aushärtezeit nach der Bestrahlung kann in Abhängigkeit von den genannten Faktoren und deren Zusammenspiel zwischen 10 Sekunden und 60 Minuten betragen.

In einer weiter bevorzugten Ausgestaltung ist die zweite Klebmasse identisch zu der ersten UV- aktivierbaren Klebmasse. Dies ist insbesondere bei gleichartigen Fügepartnern von Vorteil.

In einer bevorzugten Weiterbildung ist die zweite Klebmasse von der ersten UV-aktivierbaren Klebmasse verschieden, wobei die zweite Klebmasse UV-aktivierbar ist. Dadurch ist es möglich den Anforderungen zweier Fügepartner unterschiedlicher Beschaffenheit gerecht zu werden. Wenn beispielsweise ein erster Fügepartner eine besonders raue Oberfläche aufweist und ein zweiter Fügepartner eine besonders glatte Oberfläche aufweist, können die erste Klebemasse und die zweite Klebemasse in Abhängigkeit der Oberfläche des entsprechenden Fügepartners ausgewählt werden.

In einer weiter bevorzugten Ausgestaltung ist der Träger eine UV-intransparente Klebmasse. Dadurch wird ein Transferfilm erhalten, wobei die Applikation eines zweiten Substrats auf der UV- intransparenten Klebmasse von der Applikation eines ersten Substrats auf einer ersten Klebmasse entkoppelt werden kann. Eine UV-intransparente Klebmasse ist beispielsweise in der DE 10 2012 018 076 A1 gezeigt. Beispielsweise kann die Klebmasse aus einem biokompatiblen lösemittelbasierten Polyacrylat-Klebstoff, der eine Polyacrylatlösung und eine Vernetzerlösung umfasst, bestehen.

In einer weiteren Ausführungsform weist das Wickel- und stanzbare Klebeband eine Klebefestigkeit zwischen 6 und 20 MPa auf. Die Klebefestigkeit hängt von Formulierungsdetails, der UV-Strahlendosis und den zu verklebenden Substraten ab. In einer bevorzugten Ausgestaltung umfasst die erste UV-aktivierbare Klebmasse 2 - 40 Gew.-% Filmbildner, 10 - 70 Gew.-% aromatische Epoxidharze, cycloaliphatische Epoxidharze, wobei die cycloaliphatischen Epoxidharze 35 Gew.-% nicht überschreiten, 0,5 - 7 Gew.-% kationische Initiatoren, 0 - 50 Gew.-% epoxidierter Polyetherverbindungen, und 0 - 20 Gew.-% Polyol, wobei sich die Anteile zu 100% addieren.

Eine Aushärtung der Klebmasse gemäß der vorstehenden Zusammensetzung kann im offenliegenden Zustand durch UV-Bestrahlung angestoßen werden. Die Klebmasse kann nach einer Offenzeit von 10 Sekunden bis 60 Minuten gefügt werden und schließlich eine strukturelle Verbundfestigkeit bereitstellen. Außerdem ist die Klebmasse unter Normalbedingungen stabil. Das bedeutet, dass die Herstellung und die Handhabung ohne weiteren UV-Schutz unter Raumlichtbedingungen möglich sind. UVgeschützt verpackt ist die Klebmasse bei Raumtemperatur über mehrere Monate lagerstabil.

In einer nicht erfindungsgemäßen Weiterbildung ist die zweite Klebmasse von der ersten UV-aktivierbaren Klebmasse verschieden, wobei die zweite Klebmasse nicht UV-aktivierbar ist. Dadurch kann die Applikation eines zweiten Substrats auf der nicht UV-aktivierbaren Klebmasse von der Applikation eines ersten Substrats auf einer ersten Klebmasse entkoppelt werden.

Die oben gestellte Aufgabe wird weiterhin durch ein Verfahren zum klebenden Verbinden zweier Fügeteile mit den Merkmalen des Anspruchs 7 gelöst. Vorteilhafte Weiterbildungen des Verfahrens ergeben sich aus den Unteransprüchen sowie der vorliegenden Beschreibung und den Figuren.

Entsprechend wird ein Verfahren zum klebenden Verbinden zweier Fügeteile mittels des wickel- und stanzbaren Klebebands vorgeschlagen, welches die nachfolgenden Schritte umfasst: UV- Aktivierung einer ersten UV-aktivierbaren Klebmasse des Wickel- und stanzbaren Klebebands, Applizieren des Wickel- und stanzbaren Klebebands mittels der aktivierten ersten Klebmasse auf einem ersten Fügeteil innerhalb der Offenzeit der ersten Klebmasse, Lagerung oder Transport des ersten Fügeteils und des Wickel- und stanzbaren Klebebands, UV-Aktivierung einer zweiten UV- aktivierbaren Klebmasse des Wickel- und stanzbaren Klebebands, Applizieren der aktivierten zweiten Klebmasse auf ein zweites Fügeteil innerhalb der Offenzeit der zweiten Klebmasse.

Durch den UV-intransparenten Träger kann die Aushärtung in einem zweistufigen, voneinander entkoppelten Prozess ausgeführt werden. So kann zum Beispiel bei einem symmetrischen doppelseitigen Klebeband bestehend aus einem UV-intransparenten Träger und zwei gleichartigen UV-aktivierbaren Klebmassen ein möglicher Anwender das Klebeband einseitig aktivieren und auf einem ersten Fügeteil applizieren, ohne dass hierdurch eine Aktivierung der zweiten Klebmasse stattfindet. Diese kann in dem genannten Beispiel innerhalb der Haltbarkeit des Klebebandes beim Endanwender inklusive des vorausgerüsteten ersten Fügeteils aktiviert und befestigt werden.

In einer bevorzugten Ausführungsform wird pro Applikationsschritt nur eine UV-aktivierbare Klebmasse mittels UV-Strahlung bestrahlt. Dadurch ist es möglich zunächst nur eine Klebmasse des Klebebands zu aktivieren.

In einer bevorzugten Weiterbildung umfassen die Fügeteile höherenergetische Oberflächen, bevorzugt Metalloberflächen, Faserverbundwerkstoffoberflächen und/oder Glasoberflächen.

In einer weiter bevorzugten Ausgestaltung umfassen die Fügeteile niederenergetische Oberflächen, bevorzugt Kunststoffoberflächen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch ein symmetrisches doppelseitiges Klebeband mit UV-intransparentem Träger und UV-aktivierbarer Klebmasse auf beiden Seiten;
- Figur 2: schematisch ein asymmetrisches doppelseitiges Klebeband mit UV-intransparentem Träger und einer UV-aktivierbaren und einer nicht UV-aktivierbaren Klebmasse;
- Figur 3: schematisch einen Transferfilm bestehend aus einer UV-aktivierbaren Klebmasse und einer UV-intransparenten Klebmasse;
- Figur 4: schematisch ein einseitiges Klebeband bestehend aus UV-intransparentem Träger und UV-aktivierbarer Klebmasse;
- Figur 5: schematisch eine UV-Aktivierung der ersten Klebmasse aus Figur 1 ;
- Figur 6: schematisch ein Applizieren der UV-aktivierten ersten Klebmasse aus Figur 5 auf ein Fügeteil innerhalb der Offenzeit;
- Figur 7: schematisch eine UV-Aktivierung der zweiten Klebmasse des vorausgerüsteten Fügeteils nach Figur 6; und
- Figur 8: schematisch ein Applizieren der UV-aktivierten zweiten Klebmasse aus Figur 7 auf ein zweites Fügeteil innerhalb der Offenzeit.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

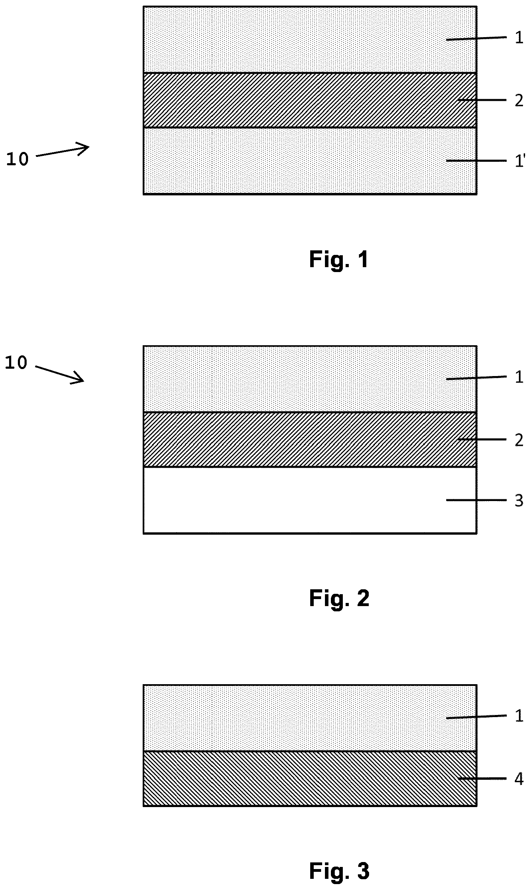

In Figur 1 ist schematisch ein symmetrischer Aufbau eines doppelseitigen Klebebandes 10 mit einem UV-intransparenten Träger 2 und UV-aktivierbaren Klebmassen 1, 1' dargestellt. Die UV-aktivierbaren Klebmassen 1, 1' können sich in ihrer Zusammensetzung und in ihren mechanischen Eigenschaften unterscheiden. Als Träger 2 kann jedes UV-intransparente flächige Material verwendet werden.

In Figur 2 ist schematisch ein asymmetrischer Aufbau eines doppelseitigen Klebebandes 10 mit einem UV-intransparenten Träger 2 und einer UV-aktivierbaren Klebmasse 1 sowie einer nicht UV- aktivierbaren Klebmasse 3 dargestellt. Hierbei kann die nicht UV-aktivierbare Klebmasse 3 zum Beispiel ein beliebiger Haftklebstoff sein.

In Figur 3 ist schematisch ein Aufbau bestehend aus einer UV-intransparenten Klebmasse 4 und einer UV-aktivierbaren Klebmasse 1 dargestellt. Das Klebeband kann als Transferfilm eingesetzt werden. Für die UV-intransparenten Klebmasse 4 kann eine beliebige Haftklebmasse mit UV- intransparenten Eigenschaften zum Einsatz kommen.

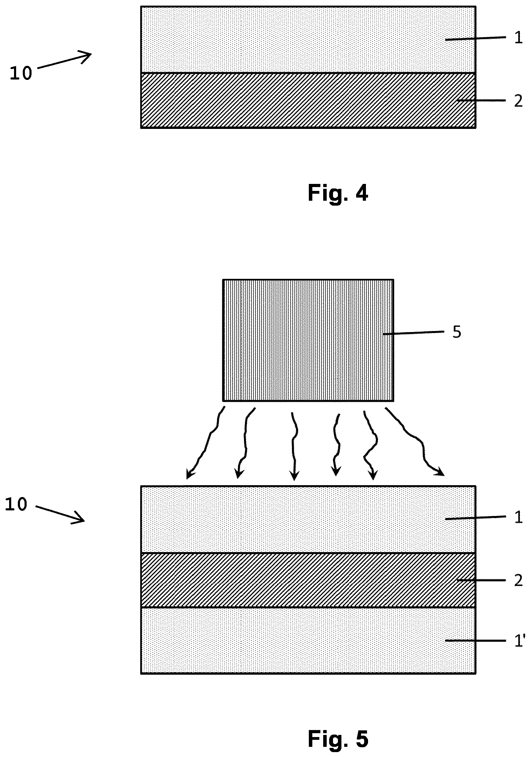

In Figur 4 ist schematisch der Aufbau eines einseitigen Klebebandes 10 bestehend aus einem UV- intransparenten Träger 2 und einer UV-aktivierbaren Klebmasse 1 dargestellt.

Figur 5 zeigt schematisch die einseitige, d.h. selektive UV-Aktivierung des symmetrischen doppelseitigen Klebebandes 10 aus Figur 1 mittels einer UV-Strahlenquelle 5. Die UV- Strahlenquelle 5 ist derart angeordnet, dass sie nur die Klebmasse 1 bestrahlt. Der UV- intransparente Träger 2 verhindert, dass die UV-Strahlen auch die Klebmasse V erreichen. Die Klebmasse 1' wird somit bei der Aktivierung der ersten Klebmasse nicht aktiviert und kann zu einem späteren Zeitpunkt gesondert aktiviert werden.

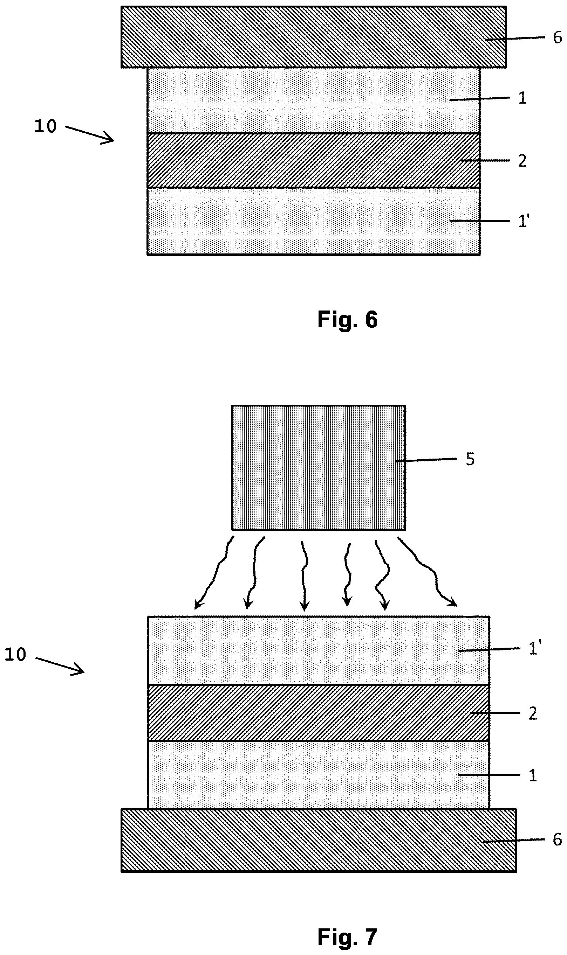

In Figur 6 ist schematisch die Applikation der ersten UV-aktivierten Klebmasse 1 des Klebebands 10 aus Figur 5 auf ein Fügeteil 6 dargestellt. Das Fügen erfolgt innerhalb der Offenzeit der ersten UV-aktivierten Klebmasse 1. Anschließend kann das vorausgerüstete Fügeteil 6 analog gelagert oder transportiert werden.

Figur 7 zeigt schematisch das mit dem Fügeteil 6 verbundene Klebeband 10 aus Figur 6. Insbesondere ist der Zustand der UV-Aktivierung der zweiten UV-aktivierbaren Klebmasse V gezeigt. Entsprechend ist die UV-Strahlenquelle 5 auf die zweite UV-aktivierbare Klebmasse 1' gerichtet.

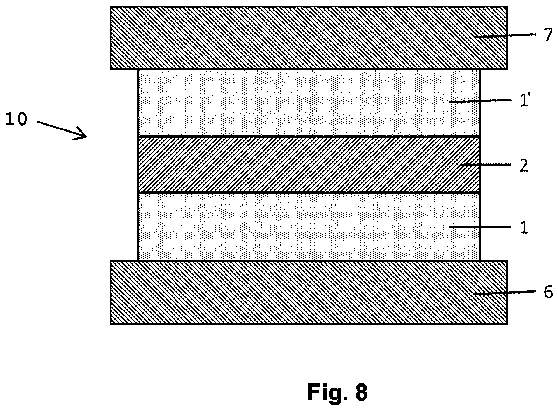

Figur 8 zeigt schematisch, wie das Klebeband 10 aus Figur 7 auf ein zweites Fügeteil 7 appliziert wird. Insbesondere wird die zweite UV-aktivierbare Klebmasse T auf das Fügeteil 7 appliziert. Das Fügen der Klebmasse 1' auf das zweite Fügeteil 7 erfolgt innerhalb der Offenzeit der zweiten UV- aktivierbaren Klebmasse 1'. Nach erfolgter Aushärtung sind die Fügeteile 6, 7 mittels des Klebebands 10 verbunden. Das erste Fügeteil 6 und das zweite Fügeteil 7 können gleicher oder unterschiedlicher Art sein.

Die Herstellung der in den vorstehenden Figuren gezeigten Klebebänder und insbesondere die dazu verwendeten Materialien können beispielsweise der WO 2017/174303 A1 entnommen werden.

Zur Herstellung eines Klebebands wird eine lösemittelhaltige Klebmasse mittels Rakel auf eine silikonisierte Polyesterfolie (Dicke 50 µm) aufgetragen. Danach erfolgt eine Trocknung für 10 Minuten bei Raumtemperatur und anschließend für 10 Minuten bei 80°C im Umluftofen. Die Auftragsmenge wird so eingestellt, dass nach dem Trocknen (Entfernen des Lösemittelgemisches) eine Schichtdicke von 150 µm resultiert.

### Man erhält einen haftklebrigen (klebrigen) Film mit einer Dicke von ca. 150 µm.

Für die Handhabung der Rohstoffe, des Klebstoffs und für die Beschichtung sind keine Schutzmaßnahmen gegen UV-Licht notwendig. Es reicht, in normaler Laborumgebung entfernt von der UV-Lampe zu arbeiten. Eine weitere Abschirmung wird nicht vorgenommen.

Anschließend wird der beschichtete klebende Film auf einen UV-intransparenten Träger oder eine UV-intransparente zweite Klebeschicht laminiert.

Der haftklebrige Film wird unter leichtem Anpressdruck auf einen UV-intransparenten Träger oder eine UV-intransparente zweite Klebeschicht aufgebracht. Dies kann unter Zuhilfenahme einer Temperatur von 30°C bis 40°C erfolgen (z.B. mittels beheizbarer Walzen), um ein besseres Aufziehen und Benetzen des haftklebrigen UV-aktivierbaren Trägers zu gewährleisten. Des Weiteren kann durch eine physikalische Oberflächenvorbehandlung (Plasma, Korona, Beflammung, etc.) eine Verbesserung der Haftung auf dem UV-intransparenten Träger oder der zweiten UV- intransparenten Klebeschicht erzielt werden.

Die Aktivierung des haftklebrigen Films erfolgt mittels UV-Licht-Bestrahlung:
Die Aktivierung des UV-aktivierbaren haftklebrigen Films (Klebmasse) 1 mittels UV-Licht (entweder UV-C-Licht aus einer Entladungslampe oder UV-A-Licht aus einer UV-A-LED-Quelle) erfolgt im Fall eines Klebebands 10 mit symmetrischem Aufbau nach Figur 1 oder des einseitigen Klebebandes 10 nach Figur 4 nur von einer Seite, nämlich der der offenen Klebstoffschicht. Anschließend wird der haftklebrige Film in der Versuchsanordnung in einer Größe von ca. 312 mm² (25 mm breit, 12,5 mm lang) auf das erste Substrat 6 (Platte aus glasfaserverstärktem Kunststoff GFK, 100 mm lang, 25 mm breit, 2 mm dick) innerhalb der Offenzeit aufgeklebt. Bei einem doppelseitigen Klebeband 10 gemäß Figur 1 ist das Bestrahlen der zweiten UV-aktivierbaren Klebmasse 1' von dem vorstehenden Prozess entkoppelt. Aus diesem Grund kann die Bestrahlung direkt erfolgen oder innerhalb der Lagerzeit des Klebebands 10. Nach der Bestrahlung der zweiten Seite wird während der Offenzeit und außerhalb der Bestrahlungszone auf den offenen Klebefilm, d.h. die zweite Klebmasse 1' das zweite Substrat 7 aufgedrückt (der Klebefilm ist auch nach der Bestrahlung noch haftklebrig), so dass die beiden Substrate 6, 7 überlappen und die Verklebungsfläche 25 mm x 12,5 mm beträgt. Die beiden Substrate 6, 7 werden mit Klammern fixiert und bei Raumtemperatur gelagert. Die Messung der Zugscherfestigkeit erfolgt dann mit diesem Prüfling, soweit nicht anders vermerkt, 24 Stunden nachdem das zweite Substrat 7 gefügt wurde.

Im Fall des asymmetrischen Aufbaus mit UV-intransparentem Träger 2 nach Figur 2 oder mit UV- intransparenter zweiter Klebeschicht 4 nach Figur 3, wird die UV-aktivierbare Klebmasse 1 mittels UV-Licht bestrahlt und innerhalb der Offenzeit auf ein erstes Substrat aufgebracht. Die Applikation eines zweiten Substrats auf der nicht UV-aktivierbaren Klebmasse 3, beziehungsweise der UV- intransparenten Klebmasse 4 kann ebenfalls entkoppelt von diesem ersten Prozessschritt erfolgen.

Die UV-Bestrahlung erfolgt, soweit nicht anders angegeben, mit der LED Spot-Lampe 100 von Hönle. Diese Lampe umfasst aus eine UV-LED (Wellenlänge 365 nm) und eine Bestrahlungskammer. Die Prüflinge werden 15 Sekunden in der Bestrahlungskammer bestrahlt. Die Bestrahlungsdosis, gemessen mit einem UV Power Puck II von EIT Instrument Market Group, beträgt 5000 mJ/cm².

Versuche mit einer UV-C-Lampe werden mit einer UV-Laboranlage von Beltron mit Transportband und UV-C-Strahler mit einem Strahlungsmaximum bei 256 nm durchgeführt. Das Transportband wird mit 2 m/min betrieben. Die Bestrahlungsdosis im UV-C-Bereich, gemessen mit einem UV Power Puck II von EIT Instrument Market Group, beträgt 197 mJ/cm².

Trotz deren deutlich höherer Wellenlänge können die Klebmassen auch mit der UV-LED-Anlage aktiviert werden. Es sind ähnliche Bestrahlungszeiten wie bei der UV-C-Anlage möglich und die Ergebnisse in Offenzeit und Verklebungsfestigkeit liegen im gleichen Bereich.

Unter Offenzeit wird die maximal mögliche Zeitdauer zwischen Entnahme vom Bestrahlungsband (UV-C) bzw. Entnahme aus der Bestrahlungskammer (UV-A) und dem Zeitpunkt der Fügung mit einem zweiten Substrat verstanden. In dieser Zeit können die Fügeteile gefügt werden. Sie ist so definiert, dass in dieser Zeit die Klebeschicht noch haftklebrig (tackig) ist. Die Offenzeit wird bestimmt, indem bei den Klebefilmen die Klebrigkeit ihrer Oberfläche nach der Bestrahlung mit dem Finger geprüft wird. Direkt nach der Bestrahlung ist der Klebefilm noch klebrig/tackig. Nach einer gewissen Zeit ist eine spürbare Abnahme der Tackigkeit zu bemerken, die dann schnell bis schließlich hin zu einer tackfreien Oberfläche abfällt. Die Offenzeit wird festgemacht an dem Zeitpunkt, bei dem die Tackigkeit merklich abnimmt, sodass anschließend kein Tack mehr vorhanden ist. Es zeigt sich, dass, so lange die Oberflächen noch klebrig sind, ein Fügen möglich ist und die anschließende Aushärtung zu einer homogene Klebeverbindung führt. Sobald die Oberflächen an Tack verlieren, ist der Aushärtevorgang schon so weit fortgeschritten, dass ein Fügen nicht mehr möglich ist. Dies zeigt sich dann in stark verringerten Festigkeitswerten, gemessen an der quasistatischen Zugscherfestigkeit. Die Fügung der Klebefilme geschieht direkt nach der UV-Aktivierung.

### Prüfmethoden

### a) Quasistatische Zugscherprüfung

Als Kenngröße für die Festigkeit der Klebung auf GFK werden Zugscherversuche nach DIN EN 1465 (2009) bei 23°C ± 2°C und 50 % ± 5 % relativer Luftfeuchte mit einer Prüfgeschwindigkeit von 2 mm/min durchgeführt. Die Substrate werden mit Isopropanol gereinigt und anschließend gefügt. Die Aushärtung erfolgt durch Bestrahlung mit UV-Licht und die mechanische Prüfung erfolgt 24 h nach der Aktivierung. Die Ergebnisse sind in MPa (N/mm²) angegeben. Angegeben ist jeweils der Mittelwert aus fünf Messungen inkl. Standardabweichung.

### b) Schälprüfung

Der Schälwiderstand der ausgehärteten Klebebänder auf Glas wird in Anlehnung an DIN EN 1939 (1996) bei 23°C ± 2°C und 50 % ± 5 % relativer Luftfeuchte mit einer Prüfgeschwindigkeit von 100 mm/min und einem Abzugswinkel von 90° bestimmt. Die Proben werden mittels UV-Licht ausgehärtet und 24 h nach der Aktivierung geprüft. Die Ergebnisse sind in N/mm angegeben. Angegeben ist jeweils der Mittelwert des Weiterreißwiderstandes aus fünf Messungen inkl. Standardabweichung.

### c) Zugprüfung

Als Kenngröße für die Festigkeit des reinen Klebstofffilms im ausgehärteten Zustand werden Zugversuche in Anlehnung an DIN EN ISO 527 (2012) bei 23°C ± 2°C und 50 % ± 5 % relativer Luftfeuchte mit einer Prüfgeschwindigkeit von 10 mm/min durchgeführt. Hierzu werden aus ausgehärteten Klebefilmen Streifen mit einer Breite von 19 mm und einer Länge von 100 mm geschnitten. Die Schichtdicke beträgt in den dargestellten Ergebnissen 0,2 mm. Die Proben werden mittels UV-Licht ausgehärtet und 24 h nach der Aktivierung geprüft. Die Ergebnisse sind in MPa (N/mm²) angegeben. Angegeben ist jeweils der Mittelwert aus fünf Messungen inkl. Standardabweichung.

In der folgenden Tabelle sind Beispiele bezüglich des Klebebandaufbaus aufgeführt, wobei K1-K4 erfindungsgemäße Aufbauten und V1 ein klebender Transferfilm ohne UV-intransparenten Träger sind:

| Beispiel: | K1 | K2 | K3 | K4 | V1 |
|---|---|---|---|---|---|
| | | | | | |
| Klebmasse (KM); Dicke: 0,15 mm | KM 1 | KM 1 | KM 2 | KM 2 | KM 2 |
| Träger (T) | T 1 | T | T 1 | T 2 | - |
| Klebmasse (KM); Dicke: 0,15 mm | KM 1 | KM 1 | KM 2 | KM 2 | KM 2 |

In der folgenden Tabelle sind die Ergebnisse der Zugscher-, Zug- und Schälprüfungen zusammengefasst.

| Beispiel: | K1 | K2 | K3 | K4 | V1 |
|---|---|---|---|---|---|
| | | | | | |
| Zugscherfestigkeit [MPa] | 18,6 ± 1,5 (AF/CSF) | 9,9 ± 0,7 (AF) | 23,9 ± 1,8 (CSF) | 8,6 ± 1,4 (AF) | 21,8 ± 0,8 (AF/CSF) |
| Schälwiderstand [N/mm] | 0,12 ± 0,03 (AF) | 0,71 ± 0,18 (AF) | 0,14 ± 0,04 (AF) | 0,79 ± 0,11 (AF) | 0,11 ± 0,02 (AF) |
| Zugfestigkeit [MPa] | 34,6 ±1,2 | 9,1 ± 1,3 | 30,6 ± 2,1 | 10,1 ± 1,1 | 11,8 ± 2,4 |
| Legende: AF: Adhäsionsbruch; CSF: kohäsives Fügeteilversagen | | | | | |

Die Klebfilme K1 und K2, sowie K3, K4 und V1 besitzen jeweils dieselben UV-aktivierbaren Klebmassen. Lediglich der jeweilige Träger wurde variiert, um Unterschiede in der Auswahl desselbigen aufzuzeigen.

Die Klebfilme nach K1, K3 und V1 unterscheiden sich im Rahmen der Standardabweichung in der Zugscherfestigkeit und dem Schälwiderstand nicht signifikant. Hier ist der Einfluss des Trägers im Vergleich zu einem Transferfilm nicht sehr dominant. Anders verhält es sich beim Vergleich der Zugfestigkeit. Dort dominiert der Einfluss des Trägers, sodass dort in den Beispielen nach K1 und K3 eine deutlich höhere Zugfestigkeit im Vergleich zu V1 gemessen werden konnte.

Die Zugscherfestigkeiten und Schälwiderstände der Beispiele K2 und K3 unterscheiden sich im Rahmen der Standardabweichung nicht signifikant. Die Zugfestigkeit der genannten Beispiele liegt auf dem Niveau des Transferfilms nach V1.

So konnte ein Nachweis über den Einfluss der unterschiedlichen Trägermaterialien erbracht werden. Trägermaterial 1 in den Beispielen K1 und K3 erhöht die Zugfestigkeit im Vergleich zur Referenz V1, Trägermaterial 2 in den Beispielen K2 und K4 erhöht den Schälwiderstand signifikant.

In der folgenden Tabelle sind die Aktivierungen unterschiedlich vorgenommen worden. So wurden in Beispiel K5 beide Klebmassen zeitlich direkt aufeinander folgend aktiviert und anschließend gefügt. In Beispiel K6 wurde zuerst die erste Klebmasse aktiviert und gefügt und die zweite Klebmasse erst 4 Tage später aktiviert und mit dem zweiten Zugschersubstrat gefügt.

| Beispiel: | K5 | K6 |
|---|---|---|
| | | |
| Seite 1: Klebmasse (KM); Dicke: 0,15 mm | KM 2 | KM 2 |
| Träger (T) | T 2 | T 2 |
| Seite 2: Klebmasse (KM); Dicke: 0,15 mm | KM 2 | KM 2 |
| Zeit zwischen Aktivierung Seite 1 und Seite 2 | 15 Sekunden | 4 Tage |

In der folgenden Tabelle sind die Ergebnisse der Zugscherprüfungen zusammengefasst.

| Beispiel: | K5 | K6 |
|---|---|---|
| | | |
| Zugscherfestigkeit [MPa] | 8,6 ± 1,4 (AF) | 9,2 ± 1,2 (AF) |
| Legende: AF: Adhäsionsbruch; CSF: kohäsives Fügeteilversagen | | |

Die Zugscherfestigkeiten der Klebfilme nach K5 und K6 weisen im Rahmen der Standardabweichung keinen Unterschied auf. Somit konnte die Wirksamkeit des UV-intransparenten Trägers und der damit entkoppelten Prozesskette validiert und verifiziert werden.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 10: Klebeband
- 1: Erste UV-aktivierbare Klebmasse
- 1': Zweite UV-aktivierbare Klebmasse
- 2: UV-intransparenter Träger
- 3: Nicht UV-aktivierbare Klebmasse
- 4: UV-intransparente Klebmasse
- 5: UV-Strahlenquelle
- 6: Erstes Fügeteil
- 7: Zweites Fügeteil

## Patentansprüche

1. Wickel- und stanzbares Klebeband (10) zur selektiven UV-aktivierung, umfassend mindestens eine erste UV-aktivierbare Klebmasse (1) auf Basis von Epoxid, welche Fotoinitiatoren aufweist und nach Bestrahlung mit UVA- oder UVC-Licht beginnt auszuhärten, eine zweite UV-aktivierbare Klebmasse (1', 3), welche Fotoinitiatoren aufweist und nach Bestrahlung mit UVA- oder UVC-Licht beginnt auszuhärten, und einen Träger (2), **dadurch gekennzeichnet, dass** der Träger (2) UV-intransparent ist, zur Bereitstellung einer selektiven UV-Aktivierbarkeit des Klebebands (10), und eine erste Oberfläche und eine zweite Oberfläche aufweist, wobei die erste UV-aktivierbare Klebmasse (1) auf der Seite der ersten Oberfläche des Trägers (2) angeordnet ist, und die zweite UV-aktivierbare Klebmasse (1', 3) auf der Seite der zweiten Oberfläche des Trägers (2) angeordnet ist.

2. Wickel- und stanzbares Klebeband (10) gemäß Anspruch 1, **dadurch gekennzeichnet, dass** die zweite Klebmasse (1') identisch zu der ersten UV-aktivierbaren Klebmasse (1) ist.

3. Wickel- und stanzbares Klebeband (10) gemäß Anspruch 1, **dadurch gekennzeichnet, dass** die zweite Klebmasse (1') von der ersten UV-aktivierbaren Klebmasse (1) verschieden ist.

4. Wickel- und stanzbares Klebeband (10) gemäß einem der vorhergehenden Ansprüche, **dadurch gekennzeichnet, dass** der Träger eine UV-intransparente Klebmasse (4) ist.

5. Wickel- und stanzbares Klebeband (10) gemäß einem der vorhergehenden Ansprüche, **dadurch gekennzeichnet, dass** die erste UV-aktivierbare Klebmasse (1) umfasst:
a. 2 - 40 Gew.-% Filmbildner,
b. 10 - 70 Gew.-% aromatische Epoxidharze,
c. cycloaliphatische Epoxidharze, wobei die cycloaliphatischen Epoxidharze 35 Gew.-% nicht überschreiten,
d. 0,5 - 7 Gew.-% kationische Initiatoren,
e. 0 - 50 Gew.-% epoxidierter Polyetherverbindungen, und f. 0 - 20 Gew.-% Polyol,
wobei sich die Anteile zu 100% addieren.

6. Wickel- und stanzbares Klebeband (10) gemäß Anspruch 1, **dadurch gekennzeichnet, dass** die zweite Klebmasse (1 ') von der ersten UV-aktivierbaren Klebmasse (1) verschieden ist, wobei die zweite Klebmasse (1') nicht UV-aktivierbar ist.

7. Verfahren zum klebenden Verbinden zweier Fügeteile (6, 7) mittels eines Wickel- und stanzbaren Klebebands (10), wobei das wickel- und stanzbare Klebeband (10) mindestens eine erste UV-aktivierbare Klebmasse (1) auf Basis von Epoxid, welche Fotoinitiatoren aufweist und nach Bestrahlung mit UVA- oder UVC-Licht beginnt auszuhärten, eine zweite UV-aktivierbare Klebmasse (1', 3), welche Fotoinitiatoren aufweist und nach Bestrahlung mit UVA- oder UVC-Licht beginnt auszuhärten, und einen Träger (2), **dadurch gekennzeichnet, dass** der Träger (2) UV-intransparent ist, zur Bereitstellung einer selektiven UV-Aktivierbarkeit des Klebebands (10), und eine erste Oberfläche und eine zweite Oberfläche aufweist, wobei die erste UV-aktivierbare Klebmasse (1) auf der Seite der ersten Oberfläche des Trägers (2) angeordnet ist, und die zweite UV-aktivierbare Klebmasse (1', 3) auf der Seite der zweiten Oberfläche des Trägers (2) angeordnet ist, die Schritte umfassend:
- UV-Aktivierung der ersten UV-aktivierbaren Klebmasse (1) des wickel- und stanzbaren Klebebands (10),
- Applizieren des wickel- und stanzbaren Klebebands (10) mittels der aktivierten ersten Klebmasse (1) auf einem ersten Fügeteil (6) innerhalb der Offenzeit der ersten Klebmasse (1),
- Lagerung oder Transport des ersten Fügeteils (6) und des Wickel- und stanzbaren Klebebands (10),
- UV-Aktivierung einer zweiten UV-aktivierbaren Klebmasse (1') des wickel- und stanzbaren Klebebands (10),
- Applizieren der aktivierten zweiten Klebmasse (1') auf ein zweites Fügeteil (7) innerhalb der Offenzeit der zweiten Klebmasse (1').

8. Verfahren zum klebenden Verbinden zweier Fügeteile (6, 7) gemäß Anspruch 7, **dadurch gekennzeichnet, dass** pro Applikationsschritt nur eine UV-aktivierbare Klebmasse (1, 1') mittels UV-Strahlung bestrahlt wird.

9. Verfahren zum klebenden Verbinden zweier Fügeteile (6, 7) gemäß Anspruch 7 oder 8, **dadurch gekennzeichnet, dass** die Fügeteile (6, 7) höherenergetische Oberflächen, bevorzugt Metalloberflächen, Faserverbundwerkstoffoberflächen und/oder Glasoberflächen umfassen.

10. Verfahren zum klebenden Verbinden zweier Fügeteile (6, 7) gemäß Anspruch 7 oder 8, **dadurch gekennzeichnet, dass** die Fügeteile (6, 7) niederenergetische Oberflächen, bevorzugt Kunststoffoberflächen umfassen.

## Claims

1. Adhesive tape (10) that can be wound and stamped for selective UV activation, comprising at least a first UV activatable adhesive compound (1) on an epoxide basis, which comprises photo initiators and begins curing after irradiation with UVA- or UVC-radiation, a second UV activatable adhesive compound (1', 3), which comprises photo initiators and begins curing after irradiation with UVA- or UVC-radiation, and a carrier (2), **characterized in that** the carrier (2) is UV intransparent, for providing a selective UV activation of the adhesive tape, having a first surface and a second surface, wherein the first UV activatable adhesive compound (1) is arranged on the side of the first surface of the carrier (2) and the second UV-activatable adhesive compound (1', 3) is arranged on the side of the second surface of the carrier (2).

2. Adhesive tape (10) that can be wound and stamped according to claim 1, **characterized in that** the second adhesive compound (1') is identical to the first UV activatable adhesive compound (1).

3. Adhesive tape (10) that can be wound and stamped according to claim 1, **characterized in that** the second adhesive compound (1') is different from the first UV activatable adhesive compound (1).

4. Adhesive tape (10) that can be wound and stamped according to any of the preceding claims, **characterized in that** the carrier is a UV intransparent adhesive compound (4).

5. Adhesive tape (10) that can be wound and stamped according to any of the preceding claims, **characterized in that** the first UV activatable adhesive compound (1) comprises:
a. 2 - 40 percent by weight of film former,
b. 10 - 70 percent by weight of aromatic epoxy resins,
c. cyclo-aliphatic epoxy resins, the cyclo-aliphatic epoxy resins not exceeding 35 percent by weight,
d. 0,5 - 7 percent by weight of cationic initiators,
e. 0 - 50 percent by weight of epoxy-enhanced polyether compounds, and
f. 0 - 20 percent by weight of polyol,
the proportions adding up to 100 %.

6. Adhesive tape (10) that can be wound and stamped according to claim 1, **characterized in that** the second adhesive compound (1') is different from the first UV-activatable adhesive compound (1), wherein the second adhesive compound (1') is not UV activatable.

7. Method for adhesive joining oft wo join partners (6, 7) by means of an adhesive tape (10) that can be wound and stamped, comprising at least a first UV activatable adhesive compound (1) on an epoxide basis, which comprises photo initiators and begins curing after irradiation with UVA- or UVC-radiation, a second UV activatable adhesive compound (1', 3), which comprises photo initiators and begins curing after irradiation with UVA- or UVC-radiation, and a carrier (2), **characterized in that** the carrier (2) is UV intransparent, for providing a selective UV activation of the adhesive tape, having a first surface and a second surface, wherein the first UV activatable adhesive compound (1) is arranged on the side of the first surface of the carrier (2) and the second UV-activatable adhesive compound (1', 3) is arranged on the side of the second surface of the carrier (2), the steps comprising:
- UV activation of the first UV activatable adhesive compound (1) of the adhesive tape (10) that can be wound and stamped,
- Applying the adhesive tape (10) that can be wound and stamped by means of the activated first adhesive compound (1) on a first join partner (6) during the open time of the first adhesive compound (1),
- Storage or transport of the first join partner (6) and the adhesive tape (10) that can be wound and stamped,
- UV activation of the second UV activatable adhesive compound (1') of the adhesive tape (10) that can be wound and stamped,
- Applying the activated second adhesive compound (1') on a second join partner (7) during the open time of the second adhesive compound (1').

8. Method for adhesive joining of two join partners (6, 7) according to claim 7, **characterized in that** per application step only one UV activatable adhesive compound (1, 1') is irradiated by means of UV radiation.

9. Method for adhesive joining of two join partners (6, 7) according to claim 7 or 8, **characterized in that** the join partners (6, 7) are high energy surfaces, preferably metal surfaces, fiber composites and/or glass surfaces.

10. Method for adhesive joining of two join partners (6, 7) according to claim 7 or 8, **characterized in that** the join partners (6, 7) are low energy surfaces, preferably plastic surfaces.

## Revendications

1. Une bande adhésive (10) enroulable et emboutissable pour une activation UV sélective, comprenant au moins un premier composé adhésif à base d'époxyde (1) activable par UV, qui comprend des photoamorceurs et commence à durcir après une irradiation avec un rayonnement UVA ou UVC, un deuxième composé adhésif activable par UV (1', 3), qui comprend des photoamorceurs et commence à durcir après une irradiation avec un rayonnement UVA ou UVC, et un support (2), **caractérisé en ce que** le support (2) est opaque aux UV, pour fournir une activation UV sélective du ruban adhésif, ayant une première surface et une seconde surface, le premier composé adhésif activable par UV (1) étant disposé sur le côté de la première surface du support (2) et le second composé adhésif activable par UV (1) est disposé sur le côté de la première surface du support (2) et le second composé adhésif activable par UV (1', 3) est disposé sur le côté de la deuxième surface du support (2).

2. Une bande adhésive (10) enroulable et emboutissable selon la revendication 1, **caractérisée en ce que** la deuxième composition adhésive (1') est identique à la première composition adhésive activable par UV (1).

3. Une bande adhésive (10) enroulable et emboutissable selon la revendication 1, **caractérisée en ce que** la deuxième composition adhésive (1') est différente de la première composition adhésive activable par UV (1).

4. Une bande adhésive (10) enroulable et emboutissable selon l'une quelconque des revendications précédentes, **caractérisée en ce que** le support est une composition adhésive opaque aux UV (4).

5. Une bande adhésive (10) enroulable et emboutissable selon l'une quelconque des revendications précédentes, **caractérisée en ce que** le premier composé adhésif activable par UV (1) comprend :
a. de 2 à 40 pour cent en poids d'agent filmogène,
b. de 10 à 70 pour cent en poids de résines époxy aromatiques,
c. des résines époxy cyclo-aliphatiques, les résines époxy cyclo-aliphatiques n'excédant pas 35 pour cent en poids,
d. de 0,5 à 7 pour cent en poids d'amorceurs cationiques,
e. de 0 à 50 pour cent en poids de composés polyéthers améliorés par des époxy, et
f. de 0 à 20 pour cent en poids de polyol,
la somme des proportions valant 100 %.

6. Une bande adhésive (10) enroulable et emboutissable selon la revendication 1, **caractérisée en ce que** le deuxième composé adhésif (1') est différent du premier composé adhésif activable par UV (1), dans lequel le deuxième composé adhésif (1') n'est pas activable par rayonnement UV.

7. Un procédé d'assemblage adhésif de deux composants d'assemblage (6, 7) au moyen d'une bande adhésive (10) enroulable et emboutissable, comprenant au moins une première masse adhésive (1) activable par UV à base d'époxyde, qui comprend des photoamorceurs et commence à durcir après une irradiation avec un rayonnement UVA ou UVC, un deuxième composé adhésif activable par UV (1', 3), qui comprend des photoamorceurs et commence à durcir après une irradiation avec un rayonnement UVA ou UVC, et un support (2), **caractérisé en ce que** le support (2) est opaque aux UV, pour fournir une activation UV sélective de la bande adhésive, ayant une première surface et une seconde surface, dans lequel le premier composé adhésif activable par UV (1) est disposé sur le côté de la première surface du support (2) et le deuxième composé adhésif activable par UV (1', 3) est disposé sur le côté de la deuxième surface du support (2), les étapes comprenant :
- activation UV de la première composition adhésive activable par UV (1) du ruban adhésif (10) pouvant être enroulé et embouti,
- appliquer le ruban adhésif (10) enroulable et emboutissable au moyen du premier composé adhésif activé (1) sur un premier composant d'assemblage (6) pendant le temps ouvert du premier composé adhésif (1),
- stockage ou transport du premier composant d'assemblage (6) et du ruban adhésif (10) pouvant être enroulé et embouti,
- activation UV du deuxième composé adhésif activable par UV (1') du ruban adhésif (10) pouvant être enroulé et embouti,
- application du deuxième composé adhésif activé (1') sur un deuxième composant d'assemblage (7) pendant le temps ouvert du deuxième composé adhésif (1').

8. Un procédé d'assemblage adhésif de deux composants d'assemblage (6, 7) selon la revendication 7, **caractérisé en ce que** par étape d'application, un seul composé adhésif activable par UV (1, 1') est irradié au moyen d'un rayonnement UV.

9. Un procédé d'assemblage adhésif de deux composants d'assemblage (6, 7) selon la revendication 7 ou 8, **caractérisé en ce que** les composants d'assemblage (6, 7) sont des surfaces à haute énergie, de préférence des surfaces métalliques, des composites fibreux et/ou des surfaces en verre.

10. Un procédé d'assemblage adhésif de deux composants d'assemblage (6, 7) selon la revendication 7 ou 8, **caractérisé en ce que** les composants d'assemblage (6, 7) sont des surfaces à faible énergie, de préférence des surfaces en matière plastique.
